# EUROPÄISCHE PATENTSCHRIFT

(11) **EP 1 175 273 B1**
(45) Veröffentlichungstag und Bekanntmachung des Hinweises auf die Patenterteilung: **25.06.2003**
(21) Anmeldenummer: 00938522.0
(22) Anmeldetag: 02.05.2000
(51) Int. Cl.: B23D 63/00

(54) **POSITIONIERVORRICHTUNG FÜR SÄGEBLÄTTER**
POSITIONING DEVICE FOR SAW BLADES
DISPOSITIF DE POSITIONNEMENT POUR LAMES DE SCIE

(30) Priorität: 03.05.1999 DE 19920099
(43) Veröffentlichungstag der Anmeldung: 30.01.2002
(73) Patentinhaber: WALTER AG, 72072 Tübingen (DE)
(72) Erfinder: REIN, Harry, D-72074 Tübingen (DE)
(74) Vertreter: Patentanwälte Rüger, Barthelt & Abel
(86) Internationale Anmeldenummer: DE0001356
(87) Internationale Veröffentlichungsnummer: WO00066308

(56) Entgegenhaltungen:
- DE-A- 3 048 738
- DE-A- 3 230 277
- DE-C- 19 630 057
- US-A- 4 018 109
- US-A- 5 078 029

## Beschreibung

Die Erfindung betrifft eine Positioniervorrichtung, die insbesondere zum definierten schrittweisen Positionieren von Kreissägeblättern oder anderen Sägeblättern an einer Sägeblattbearbeitungsmaschine, bspw. einer Schleifmaschine dient.

Sägeblätter weisen in einer Reihe hintereinander angeordnete Zähne auf, die jeweils einen Schliff aufweisen. Um diesen zu erzeugen, müssen die Zähne nacheinander in Bearbeitungsposition überführt werden. Ein oder mehrere an einer Bearbeitungsmaschine vorgesehene Bearbeitungspositionen werden durch entsprechende Schleifköpfe festgelegt, die den jeweils positionierten und am Platz gehaltenen Zahn bearbeiten.

Die Genauigkeit der Positionierung des Sägeblatts bestimmt letztendlich die Genauigkeit des fertig geschliffenen Sägeblatts.

Es ist insbesondere bei Sägeblattschleifmaschinen, die zum Nachschärfen (gemischte Lose) und in der Produktion von Sägeblättern verwendet werden, erforderlich, die Sägeblattschleifmaschine an unterschiedliche Sägeblattdurchmesser, Zahngrößen sowie Zahnformen anpassen zu können. Dies gilt nicht nur hinsichtlich der Aufnahme für das Sägeblatt und hinsichtlich der Schleifköpfe, sondern auch hinsichtlich einer zum schrittweisen Weiterschalten des Sägeblatts verwendeten Sägeblattpositioniereinrichtung. Mit dieser muss sich ein Sägeblatt unabhängig von Durchmesser und Zahngröße exakt positionieren lassen.

Aus der DE 3230277 C2 ist eine Vorschubeinrichtung zum schrittweisen Drehen eines Sägeblatts bekannt. Diese Vorschubeinrichtung weist eine starr mit einem Klinkenträger verbundene Vorschubklinke auf. Der Klinkenträger ist gemeinsam mit einem Führungskörper sowie einem Linearantrieb schwenkbar gelagert. Der Linearantrieb dient dazu, den Klinkenträger etwa in Umfangsrichtung des Sägeblatts hin und her zu bewegen. Zur Abstützung und Einstellung der Schwenklage des schwenkbar gelagerten Führungskörpers dient ein Lenker, der längenverstellbar ausgebildet ist. Mit einem Ende ist er mit dem Führungskörper verbunden, während er mit seinem anderen Ende schwenkbar an einem Fixpunkt gelagert ist. Der Lenker enthält einen Linearantrieb, mit dem sich die Länge des Lenkers verstellen lässt. Eine Überlagerung der Vorschubbewegung des Klinkenträgers mit einer Längenverstellung des Lenkers ergibt die zum schrittweisen Fortdrehen des Sägeblatts erforderliche Bahnkurve.

Neben den beiden Linearachsen der Antriebe sind im Gesamtsystem drei Drehpunkte enthalten, nämlich die Drehachse des Führungskörpers und die beiden Gelenk- oder Drehachsen an den beiden Enden des Lenkers. Die Positionierung kann dadurch etwas kritisch werden.

Außerdem ist der Zusammenhang zwischen der Antriebsbewegung der beiden Linearantriebe und den erzielten Bahnkurven des Vorschubfingers von dem Durchmesser des Sägeblatts abhängig.

Davon ausgehend ist es Aufgabe der Erfindung, eine vereinfachte Positioniervorrichtung zu schaffen, die eine einfache Anpassung an unterschiedlich große Sägeblätter gestattet.

Diese Aufgabe wird mit der Positioniervorrichtung nach Anspruch 1 gelöst.

Die erfindungsgemäße Sägeblattpositioniereinrichtung weist eine Lagereinrichtung zur Aufnahme eines Sägeblatts auf. Die Lagereinrichtung kann vollständig passiv ausgebildet sein, d.h. lediglich eine Lagerung ermöglichen. Bedarfsweise kann der Lagereinrichtung ein Antrieb zugeordnet sein, der das von der Lagereinrichtung aufgenommene Sägeblatt in einer vorbestimmten Dreh- oder Verschieberichtung mit einem Drehmoment bzw. einer Kraft beaufschlagt. Dies kann zweckmäßig sein, um einen Zahn des Sägeblatts in Anlage mit einem Eingriffsglied zu halten, das bspw. an einem Zahn angreift, um das schrittweise Fortschalten des Sägeblatts zu bewirken. Der mit der Lagereinrichtung verbundene Antrieb kann dabei bedarfsweise so ausgebildet sein, dass das Drehmoment oder die Kraft zeitlich und somit von der Größe her steuerbar ist. Außerdem kann die Drehmomenterzeugung auf eine Bewegung des Eingriffglieds abgestimmt sein.

Die erfindungsgemäße Sägeblattpositioniereinrichtung weist wenigstens zwei Führungseinrichtungen auf, mit denen ein Schlitten in zwei voneinander unabhängigen Raumrichtungen positionierbar ist. Dieser Schlitten trägt das Eingriffsglied. Der Schlitten wird von zwei Antriebseinrichtungen positioniert, wobei durch Überlagerung der beiden Positionierbewegungen eine ebene Kurve entsteht, die das Eingriffsglied durchläuft.

Das Eingriffsglied ist von einem Kreuzschlitten getragen. Die beiden Wege des Kreuzschlittens sind vorzugsweise unterschiedlich groß. Bspw. ist ein erster, etwa in Umfangsrichtung orientierter Weg etwa maximal so groß wie der Sägeblattradius (oder der maximale, auf die Richtung projizierte Zahnabstand). Der etwa zur Radialrichtung des Sägeblatts (Verbindungslinie Sägeblattdrehachse zu der Schleifstelle) parallele Weg beträgt dann etwa maximal den halben Sägeblattradius.

Die Sägeblattpositioniereinrichtung weist nur zwei Führungen auf, was insgesamt eine exakte Positionierung des Sägeblatts gestattet. Die Führungen können steif ausgelegt werden; dies ermöglicht es, das Sägeblatt gegen ein auf dieses ausgeübtes Drehmoment zu positionieren, wodurch das Eingriffsglied und der betreffende Zahn definiert in Anlage gehalten werden können.

Die Antriebseinrichtungen sind vorzugsweise Servomotoren oder anderweitige positionsüberwachte oder positionsgesteuerte Antriebe. Die Erzeugung der gewünschten Bahnkurve für das Eingriffsglied ist unabhängig von dem aktuellen Sägeblattdurchmesser einfach möglich. Dies gilt insbesondere bei Verwendung von Linearführungen als Führungseinrichtungen mit rechtwinklig zueinander orientierten Führungsrichtungen. Die Steuerung der Antriebseinrichtungen übernimmt z.B. eine Mikrorechner-Steuereinrichtung, die die Antriebseinrichtungen gemäß den jeweiligen Gegebenheiten des aktuell zu bearbeitenden Sägeblatts, d.h. seinem Durchmesser und seiner Zahnteilung entsprechend steuert. Die Daten können unmittelbar von einer Erfassungseinrichtung erhalten sein.

Prinzipiell kann das Eingriffsglied an dem Schlitten starr oder schwenkbar gelagert sein. Die schwenkbare Lagerung ermöglich die Betätigung nach Art einer rastklinke, die seitlich an den Zähnen des Sägeblatts vorbeiläuft. Das Eingriffsglied kann dabei mit einer Betätigungseinrichtung (Schwenkeinrichtung) aus dem Zahnzwischenraum heraus geschwenkt werden.

Eine Sensoreinrichtung kann dabei nicht nur zur Positionsüberwachung sondern auch dazu dienen, Zahnzwischenräume zu erfassen.

Zur Anpassung an unterschiedliche Sägeblattdurchmesser dient vorzugsweise eine Verstelleinrichtung, mit der der Abstand zwischen der Drehachse der Lagereinrichtung und dem Schleifkopf einer Sägeblattschärfmaschine einstellbar ist.

Vorteilhafte Einzelheiten von Ausführungsformen und Weiterbildungen der Erfindung sind Gegenstand von Unteransprüche und/oder der Zeichnung oder der Beschreibung zu entnehmen.

In der Zeichnung sind Ausführungsbeispiele der Erfindung veranschaulicht. Es zeigen:
Fig. 1 eine Sägeblattschleifmaschine mit einer erfindungsgemäßen Sägeblattpositioniereinrichtung in schematisierter, perspektivischer Prinzipdarstellung,
Fig. 2 die Sägeblattschleifmaschine nach Fig. 1 mit Kreissägeblatt, in einer ausschnittsweisen Draufsicht,
Fig. 3 die Sägeblattpositioniereinrichtung, in einer Draufsicht und
Fig. 4 die Sägeblattpositioniereinrichtung nach Figur 1, in einer schematisierten, teilweise geschnittenen Seitenansicht.

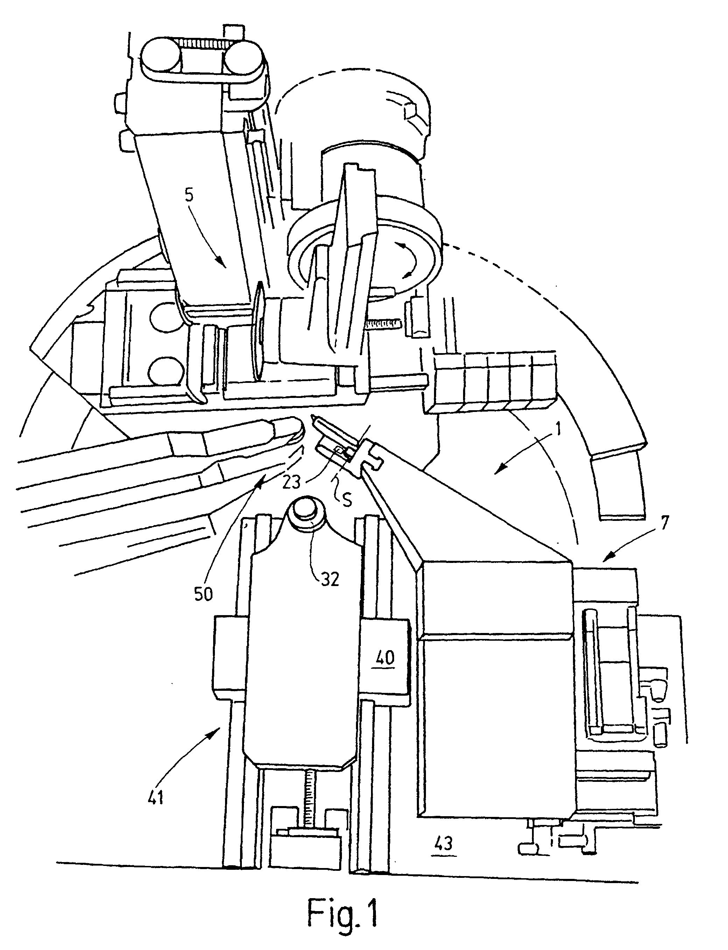

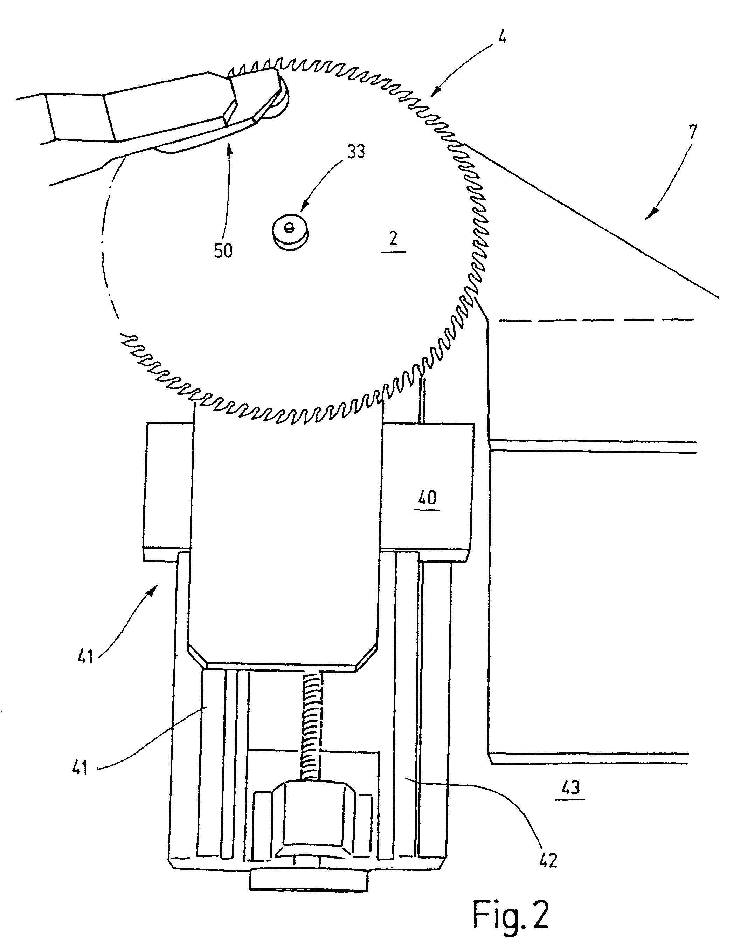

In Figur 1 ist eine Sägeblattschleifmaschine mit einer Sägeblattpositioniereinrichtung 1 veranschaulicht, die zum schrittweisen Drehen eines Kreissägeblatts 2 (Fig. 2) um seine Drehachse 3 dient. Das Kreissägeblatt 2 weist an seinem Umfang Zähne 4 auf, die von einem positionierbaren Schleifkopf 5 nacheinander zu bearbeiten sind. Bedarfsweise können auch mehrere Schleifköpfe vorgesehen sein.

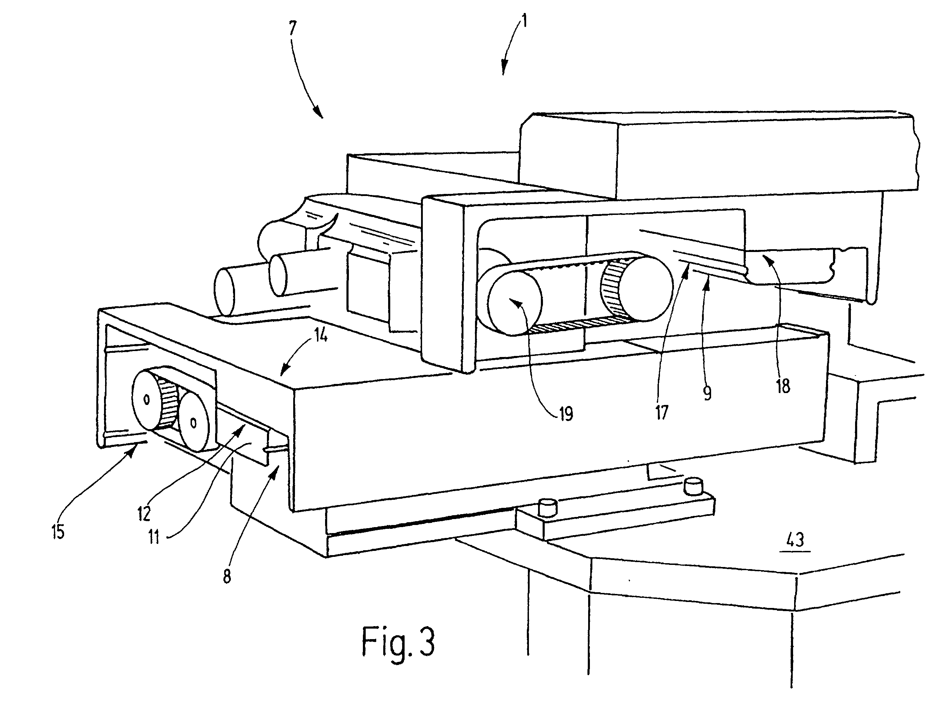

Zu der Sägeblattpositioniereinrichtung 1 gehört eine nach Art eines Kreuztischs ausgebildete Positioniervorrichtung 7. Diese weist (wie aus Fig. 1 und 3 hervorgeht) eine erste Führungseinrichtung 8 und eine zweite Führungseinrichtung 9 auf, deren Führungsrichtungen zueinander rechtwinklig gerichtet sind. Die erste Führungseinrichtung 8 beinhaltet einen ortsfest gelagerten Führungsteil 11, auf dem über eine Linearführung 12 ein Schlitten 14 in einer ersten Richtung (Z) verschiebbar gelagert ist. Die Bewegung des Schlittens 14 wird von einer ersten Antriebseinrichtung 15 gesteuert, die durch einen Servomotor gebildet wird. Mit dem Servomotor lässt sich der Schlitten positionieren und seine Position festlegen.

Der Schlitten 14 trägt die zweite Führungseinrichtung 9, die durch eine Linearführung 17 und einen von dieser geführten Schlitten 18 gebildet wird. Die Führungsrichtung (X) ist rechtwinklig zu der von der Führungseinrichtung 8 festgelegten Führungsrichtung (Z) und, bezogen auf den Schleifort, etwa in Umfangsrichtung zu dem Kreissägeblatt 2 gerichtet. Die Position und Verschiebung des Schlittens 18 wird durch eine elektrische Antriebseinrichtung 19, d.h. bspw. einen entsprechenden Servomotor festgelegt. Die Antriebseinrichtung 19 ist von dem Schlitten 14 getragen.

Die Antriebseinrichtungen 15, 19 sind über Getriebe mit konstantem Übersetzungsverhältnis an die Schlitten 14, 18 angeschlossen, so dass eine Bewegung der Antriebseinrichtungen 15, 19 immer proportional in eine Bewegung des Schlittens 18 umgesetzt wird. Dies vereinfacht die Steuerung und ermöglicht gleichbleibende Präzision im gesamten Bewegungsbereich des Schlittens 18.

Der Schlitten 18 trägt außerdem einen um eine Schwenkachse S (Fig. 1) schwenkbar gelagerten Finger 21, der als Eingriffsglied dient und bedarfsweise in zwischen den Zähnen 4 festgelegte Zahnzwischenräume eingefahren werden kann. Der Finger 21 wird bspw. durch einen Stift mit rundem oder polygonalen Querschnitt gebildet. Bedarfsweise kann er auch eine der Zahnbrust zugewandte schneidenartige Kante aufweisen.

Der Finger 21 ist mit einem Pneumatikzylinder 22 oder einer anderweitigen Schwenkeinrichtung verbunden, um bedarfsweise gegen die Kraft einer Feder aus einem Zahnzwischenraum (nach unten) heraus geschwenkt werden zu können. Die Schwenkbewegung wird von einer Sensoreinrichtung 23 überwacht, die wenigstens zwei Zustände, den Eingriffszustand mit Finger im Zahnzwischenraum und den herausgehobenen Zustand unterscheidet.

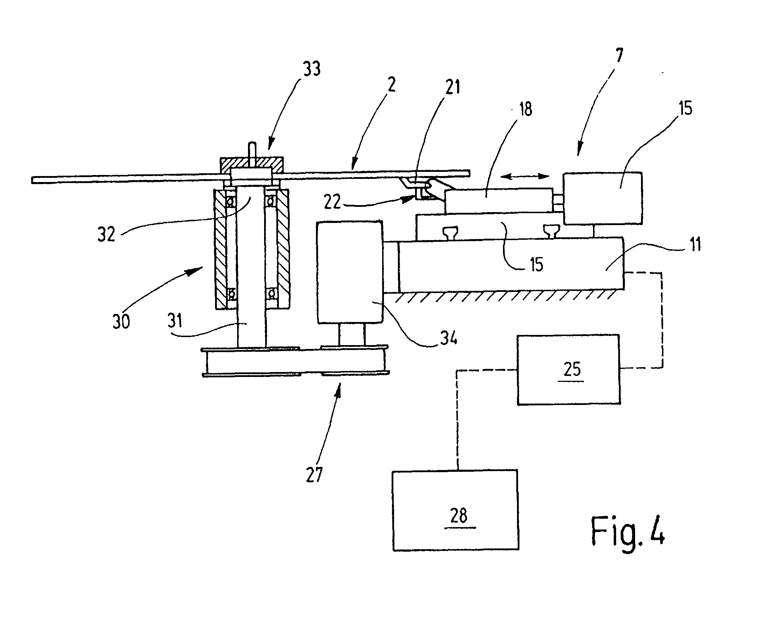

Beide Antriebseinrichtungen 15, 19 sind an eine Steuereinrichtung 25 angeschlossen, die ebenfalls den Schleifkopf 5 bzw. dessen Positioniereinrichtungen und, falls vorhanden, eine bspw. aus Figur 4 ersichtliche Einrichtung 27 zur Beaufschlagung des Sägeblatts 2 mit einem Drehmoment steuert. Die Steuereinrichtung 25 kann an eine Sensoreinrichtung 28 oder eine anderweitige Erfassungseinrichtung angeschlossen sein, die die für das Kreissägeblatt 2 charakteristischen Daten (Durchmesser, Zahnteilung usw.) liefert.

Aus Figur 4 geht insbesondere die Lagerung des Kreissägeblatts 2 mittels einer Lagereinrichtung 30 hervor. Die Lagereinrichtung 30 weist eine drehbar gelagerte Welle 31 auf, die an einem freien Ende 32 eine Klemmeinrichtung 33 für das Kreissägeblatt 2 trägt. An dem gegenüberliegenden Ende ist bspw. über einen Riementrieb ein Stellmotor 34 oder eine gesteuerte Bremse angeschlossen, die ein die Drehung des Kreissägeblatts 2 hemmendes Drehmoment erzeugen kann.

Die Lagereinrichtung 30 ist vorzugsweise von dem Schleifkopf weg und auf diesen hin verstellbar. Dazu ist sie auf einem Schlitten 40 einer Linearführung 41 montiert. Der Schlitten 40 ist an Führungsschienen 41, 42 geführt, die wie der Kreuztisch (Positioniereinrichtung 9) zur Führung des Eingriffsglieds an einem Maschinengestell 43 ortsfest gelagert sind. Die Führungsrichtung der Linearführung 41 ist vorzugsweise parallel zu einer der Führungsrichtungen (X, Z) der Positioniereinrichtung 9. Die Steuereinrichtung 25 steuert vorzugsweise auch einen Antrieb der Linearführung 40.

Die insoweit beschriebene Sägeblattpositioniereinrichtung 1 arbeitet wie folgt:

Wird ein zu bearbeitendes Kreissägeblatt 2 auf der Lagereinrichtung 30 positioniert, erhält die Steuereinrichtung 25 von der Erfassungseinrichtung 28 zunächst die wesentlichen Daten des Kreissägeblatts 2. Zur Positionierung des Kreissägeblatts 2 steuert die Steuereinrichtung 25 die Schwenkeinrichtung 22 an, um den Finger 21 abzusenken, und somit aus der Sägeblattebene herauszuführen.

Dann steuert die Steuereinrichtung 30 die Antriebseinrichtungen 15 und 19 so an, dass der Finger 21 unter einen Zahnzwischenraum in vorgegebener Position findet. Ist diese Position erreicht, wird die Schwenkeinrichtung 22 freigegeben und der Finger 21 greift in den Zahnzwischenraum. Die Steuereinrichtung 25 betätigt nun die Antriebseinrichtungen 15 und 19 an, um den Finger 21 in Umfangsrichtung des Kreissägeblatts 2 zu bewegen. Dabei kommt der Finger 21 mit einer Zahnbrust in Eingriff und schiebt diese unter Drehung des Kreissägeblatts 2 in eine definierte Position, die eine Bearbeitungsposition des Kreissägeblatts 2 festlegt. In dieser Position kann das Sägeblatt nun mit Klemmbacken 50 in der Nähe des Schleifkopfs 15 festgeklemmt und einer Schleifbearbeitung unterworfen werden.

Der Finger 21 kann währenddessen aus dem Zahnzwischenraum heraus geschwenkt und in den nächsten Zahnzwischenraum eingeschwenkt werden. Dazu werden die Antriebseinrichtungen 15, 19 und die Schwenkeinrichtung 22 von der Steuereinrichtung 25 so angesteuert, dass der Finger 21 zunächst von der Zahnbrust abhebt und dann axial aus dem Zahnzwischenraum heraus geschwenkt und zum nächsten Zahnzwischenraum verfahren wird. Dazu wird der Finger 21 um eine Zahnteilung gegen die Drehrichtung des Kreissägeblatts 2 verfahren und wieder in den Zahnzwischenraum eingeschwenkt. Ist die Schleifbearbeitung beendet, wird der Schleifkopf 5 außer Eingriff mit dem Kreissägeblatt 2 gebracht und die Klemmung des Kreissägeblatts 2 wird gelöst. Es kann nun durch Betätigung der Antriebseinrichtungen 15, 19 in seine nächste Bearbeitungsposition gefahren werden, indem der Finger 21 den betreffenden vor ihm liegenden Zahn genau um eine Zahnteilung weiterschiebt.

Bei einer etwas abgewandelten Ausführungsform greift der Finger 21 an einem anderen Zahn als dem Zahn an, der geschliffen wird. Der Finger 21 kann dann während der Schleifbearbeitung Zahns mit dem anderen Zahn, an dem die Positionierung vorgenommen wird, in Anlage bleiben, wobei die Antriebseinrichtung 29 eine Gegenkraft zu dem Finger 21 und der Antriebseinrichtung 19 aufbaut. Zur Vermeidung von Vibrationen kann das Kreissägeblatt zusätzlich in der Nähe des Schleifkopfs 5 mit der Klemmeinrichtung 50 festgeklemmt werden. Soll der Finger 21 in einen nächsten Zahnzwischenraum eingeführt werden, kann die Antriebseinrichtung 34 dazu verwendet werden, das Kreissägeblatt 2 unverdrehbar zu halten. Alternativ kann die Klemmeinrichtung 50 dazu herangezogen werden.

Eine Sägeblattpositioniereinrichtung 1 weist zwei Antriebseinrichtungen 15, 19 und zwei Führungseinrichtungen 8, 9 auf, die zueinander vorzugsweise rechtwinklig orientiert sind. Wird von den Linearführungen eine erste in Radialrichtung des Kreissägeblatts und die andere Führungseinrichtung in Umfangsrichtung orientiert, wird eine gewünschte Vorschubkurve des Eingriffglieds unabhängig vom Sägeblattdurchmesser in jeder Radialposition der ersten Führungseinrichtung jeweils mit der gleichen Ansteuerung bzw. der gleichen Ansteuerimpulsen und den Antriebseinrichtungen 15, 19 erreicht.

Zusätzlich ergibt sich ein mechanisch robuster Grundaufbau, der eine präzise Positionierung ermöglicht.

## Patentansprüche

1. Sägeblattpositioniereinrichtung (1), insbesondere für eine Sägeblattschleifmaschine,
mit einer Lagereinrichtung (27) zur Aufnahme eines Sägeblatts (2),
mit einer ersten Linear-Führungseinrichtung (8), die einen Führungsteil (12) und einen an diesem verschiebbar gelagerten Schlitten (14) aufweist und der eine erste Antriebseinrichtung (15) zugeordnet ist, um den Schlitten (14) an dem Führungsteil (12) in einer ersten Führungsrichtung (X) zu bewegen,
mit einer zweiten Linear-Führungseinrichtung (9), die einen Führungsteil (17) und einen an diesem verschiebbar gelagerten Schlitten (18) aufweist und der eine zweite Antriebseinrichtung (19) zugeordnet ist, um den Schlitten (18) an dem Führungsteil (17) in einer zweiten Führungsrichtung (Z) zu bewegen,
wobei die Führungsrichtungen (X, Z) der Führungseinrichtungen (8, 9) in einer Ebene liegen, die parallel zu dem Sägeblatt (2) festgelegt ist, und
mit einem Eingriffsglied (21) zum Drehen des Sägeblatts, das dazu eingerichtet ist, mit einem Sägeblatt (2) in Eingriff zu kommen und das von dem Schlitten (18) der zweiten Führungseinrichtung (9) getragen ist,
**dadurch gekennzeichnet, dass** der Führungsteil (12) der ersten Führungseinrichtung (8) ortsfest gelagert ist und dass der Führungsteil (17) der zweiten Führungseinrichtung (9) an dem Schlitten (14) der ersten Führungseinrichtung (8) gelagert ist.

2. Sägeblattpositioniereinrichtung nach Anspruch 1, **dadurch gekennzeichnet, dass** die zweite Antriebseinrichtung (19) von dem ersten Schlitten (14) getragen ist.

3. Sägeblattpositioniereinrichtung nach Anspruch 1, **dadurch gekennzeichnet, dass** die Führungsrichtungen (X, Z) rechtwinklig zueinander festgelegt sind.

4. Sägeblattpositioniereinrichtung nach Anspruch 1, **dadurch gekennzeichnet, dass** das Eingriffsglied (21) mit dem Schlitten (18) um eine Schwenkachse (S) schwenkbar verbunden ist.

5. Sägeblattpositioniereinrichtung nach Anspruch 4, **dadurch gekennzeichnet, dass** die Schwenkachse (S) parallel zu dem Sägeblatt (2) ausgerichtet ist.

6. Sägeblattpositioniereinrichtung nach Anspruch 4, **dadurch gekennzeichnet, dass** das Eingriffsglied (21) auf eine Eingriffsposition federnd vorgespannt ist.

7. Sägeblattpositioniereinrichtung nach Anspruch 4, **dadurch gekennzeichnet, dass** dem Eingriffsglied (21) eine Schwenkeinrichtung (22) zugeordnet ist, durch die das Eingriffsglied (21) aus seiner Eingriffsposition in eine Aushubposition schwenkbar ist.

8. Sägeblattpositioniereinrichtung nach Anspruch 4, **dadurch gekennzeichnet, dass** dem Eingriffsglied (21) ein Sensoreinrichtung (23) zur Positionserfassung zugeordnet ist.

9. Sägeblattpositioniereinrichtung nach Anspruch 1, **dadurch gekennzeichnet, dass** die Lagereinrichtung (30) eine Drehachse festlegt.

10. Sägeblattpositioniereinrichtung nach Anspruch 9, **dadurch gekennzeichnet, dass** die Lagereinrichtung (30) mit einer Verstelleinrichtung (41) quer zu der Drehachse der Lagereinrichtung verstellbar ist.

11. Sägeblattpositioniereinrichtung nach Anspruch 1, **dadurch gekennzeichnet, dass** zur Steuerung der Antriebseinrichtungen (15, 19) eine Steuereinrichtung (25) vorgesehen ist, die die Antriebseinrichtungen (15, 19) gemäß Vorgaben derart steuert, dass das Sägeblatt (2) in Zahnabständen schrittweise fortbewegt wird.

12. Sägeblattpositioniereinrichtung nach Anspruch 11, **dadurch gekennzeichnet, dass** die Steuereinrichtung (25) von einer Erfassungseinrichtung (28) Daten über das Sägeblatt (2) erhält.

13. Sägeblattschärfmaschine mit einer Positioniereinrichtung nach einem der vorhergehenden Ansprüche.

## Claims

1. Saw blade positioning device (1), in particular for a saw blade grinding machine,
with a holding means (27) to receive a saw blade (2),
with a first linear guide means (8), which has a guide section (12) and a cradle (14) displaceably disposed thereon and which has an associated first drive means (15) to move the cradle (14) on the guide section (12) in a first guide direction (X),
with a second linear guide means (9), which has a guide section (17) and a cradle (18) displaceably disposed thereon and which has an associated second drive means (19) to move the cradle (18) on the guide section (17) in a first guide direction (Z),
wherein the guide directions (X, Z) of the guide means (8, 9) lie in a plane which is fixed parallel to the saw blade (2), and
with an engagement member (21) for rotating the saw blade, which is fitted to come into engagement with the saw blade (2) and is carried by the cradle (18) of the second guide means (9),
**characterised in that** the guide section (12) of the first guide means (8) is disposed to be stationary, and that the guide section (17) of the second guide means (9) is disposed on the cradle (14) of the first guide means (8).

2. Saw blade positioning device according to Claim 1, **characterised in that** the second drive means (19) is carried by the first cradle (14).

3. Saw blade positioning device according to Claim 1, **characterised in that** the guide directions (X, Z) are fixed at right angles to one another.

4. Saw blade positioning device according to Claim 1, **characterised in that** the engagement member (21) is connected to the cradle (18) to swivel around a swivel axis (S).

5. Saw blade positioning device according to Claim 4, **characterised in that** the swivel axis (S) is oriented parallel to the saw blade (2).

6. Saw blade positioning device according to Claim 4, **characterised in that** the engagement member (21) is resiliently prestressed toward an engaged position.

7. Saw blade positioning device according to Claim 4, **characterised in that** the engagement member (21) has an associated swivel device (22), by means of which the engagement member (21) may be swivelled out of its engaged position into a raised position.

8. Saw blade positioning device according to Claim 4, **characterised in that** the engagement member (21) has an associated sensor device (23) for position determination.

9. Saw blade positioning device according to Claim 1, **characterised in that** the holding means (30) defines a rotational axis.

10. Saw blade positioning device according to Claim 9, **characterised in that** the holding means (30) may be displaced transversely to the rotational axis of the holding means with a displacement means (41).

11. Saw blade positioning device according to Claim 1, **characterised in that** for controlling the drive means (15, 19) a control means (25) is provided, which controls the drive means (15, 19) in accordance with given data in such a manner that the saw blade (2) is advanced step by step at tooth intervals.

12. Saw blade positioning device according to Claim 11, **characterised in that** the control means (25) receives data about the saw blade (2) from a detection device (28).

13. Saw blade sharpening machine with a positioning device according to one of the preceding claims.

## Revendications

1. Dispositif de positionnement de lame de scie (1), en particulier pour une machine à affûter les lames de scie,
avec un dispositif support (27) destiné à recevoir une lame de scie (2),
avec un premier dispositif de guidage linéaire (8), qui présente un élément de guidage (12) et un chariot (14) monté coulissant sur celui-ci, et auquel est associé un premier dispositif d'entraînement (15) pour déplacer le chariot (14) sur l'élément de guidage (12), dans une première direction de guidage (X),
avec un deuxième dispositif de guidage linéaire (9), qui présente un élément de guidage (17) et un chariot (18) monté coulissant sur celui-ci, et auquel est associé un deuxième dispositif d'entraînement (19) pour déplacer le chariot (18) sur l'élément de guidage (17), dans une deuxième direction de guidage (Z),
les directions de guidage (X, Z) des dispositifs de guidage (8, 9) étant situées dans un plan qui est parallèle à la lame de scie (2), et
avec un organe d'engrènement (21) pour tourner la lame de scie qui est agencé de manière à venir en prise avec une lame de scie (2) et qui est supporté par le chariot (18) du deuxième dispositif de guidage (9),
**caractérisé en ce que** le l'élément de guidage (12) du premier dispositif de guidage (8) est monté stationnaire et **en ce que** l'élément de guidage (17) du deuxième dispositif de guidage (9) est monté sur le chariot (14) du premier dispositif de guidage (8).

2. Dispositif de positionnement de lame de scie selon la revendication 1, **caractérisé en ce que** le deuxième dispositif d'entraînement est porté par le premier chariot (14).

3. Dispositif de positionnement de lame de scie selon la revendication 1, **caractérisé en ce que** les directions de guidage (X, Z) sont mutuellement perpendiculaires.

4. Dispositif de positionnement de lame de scie selon la revendication 1, **caractérisé en ce que** l'organe d'engrènement (21) est lié au chariot (18) avec possibilité de pivotement autour d'un axe de pivotement (S)

5. Dispositif de positionnement de lame de scie selon la revendication 4, **caractérisé en ce que** l'axe de pivotement (S) est disposé parallèlement à la lame de scie (2).

6. Dispositif de positionnement de lame de scie selon la revendication 4, **caractérisé en ce que** l'organe d'engrènement (21) est précontraint élastiquement dans une position d'engrènement.

7. Dispositif de positionnement de lame de scie selon la revendication 4, **caractérisé en ce qu'**un dispositif de pivotement (22) est associé à l'organe d'engrènement (21), dispositif par lequel l'organe d'engrènement (21) peut être amené par pivotement de la position en prise dans une position hors de prise.

8. Dispositif de positionnement de lame de scie selon la revendication 4, **caractérisé en ce qu'**un dispositif palpeur (23) est associé à l'organe d'engrènement (21) pour déterminer la position.

9. Dispositif de positionnement de lame de scie selon la revendication 1, **caractérisé en ce que** le dispositif support (30) définit un axe de rotation.

10. Dispositif de positionnement de lame de scie selon la revendication 9, **caractérisé en ce que** le dispositif support (30) peut être réglé transversalement à l'axe de rotation du dispositif de support, à l'aide d'un dispositif de réglage (41).

11. Dispositif de positionnement de lame de scie selon la revendication 1, **caractérisé en ce qu'**il est prévu pour la commande des dispositifs d'entraînement (15, 19), un dispositif de commande (25) qui contrôle les dispositifs d'entraînement (15, 19) en fonction de données de telle sorte que la lame de scie (2) soit déplacée pas à pas par intervalles de dents.

12. Dispositif de positionnement de lame de scie selon la revendication 11, **caractérisé en ce que** le dispositif de commande (25) reçoit d'un dispositif de mesure des données sur la lame de scie (2);

13. Machine à affûter les lames de scie pourvue d'un dispositif de positionnement selon une des revendications précédentes.
